Europäisches Patentamt

European Patent Office

Office européen des brevets

(11) Publication number: **0 088 838**
**B1**

## (12)   EUROPEAN PATENT SPECIFICATION

(45) Date of publication of patent specification: **28.12.88**

(51) Int. Cl.⁴: **G 06 F 13/00**

(21) Application number: **82301275.2**

(22) Date of filing: **12.03.82**

(54) **Input/output multiplexer.**

(43) Date of publication of application:
**21.09.83 Bulletin 83/38**

(45) Publication of the grant of the patent:
**28.12.88 Bulletin 88/52**

(84) Designated Contracting States:
**DE FR GB IT SE**

(56) Références cited:
**EP-A-0 029 177**
**GB-A-1 264 096**
**US-A-4 056 843**
**US-A-4 092 715**

(73) Proprietor: **Honeywell Bull Inc.**
**3800 W. 80th Street**
**Minneapolis Minnesota 55431 (US)**

(72) Inventor: **Crawford, Knute S.**
**3650 W. Westcott Dr.**
**Phoenix Arizona 85308 (US)**

(74) Representative: **Geissler, Bernhard, Dr. Patent-
und Rechtsanwälte et al
Bardehle-Pagenberg-Dost- Altenburg-
Frohwitter & Partner Postfach 86 06 20
D-8000 München 86 (DE)**

Courier Press, Leamington Spa, England.

## Description

This invention relates generally to data processing systems and more particularly to input/output controllers coupling the central subsystem with peripheral subsystems. The I/O controller provides the means for transferring signal groups between the central subsystem and an identified peripheral subsystem. The transfer of data signal groups between the central subsystem and the selected peripheral subsystem results from an exchange of control signal groups. Control and data signal groups flow from the central subsystem to the selected peripheral subsystem through first path means and from the selected peripheral subsystem to the central subsystem through second path means.

It is known to provide an I/O controller coupling a central subsystem and peripheral subsystems in which, in response to the initiation of a predetermined operation involving the transfer of signals between the two subsystems, further use of the I/O controller is pre-empted until completion of the predetermined operation. Because an operation can typically involve the exchange of a multiplicity of signal groups, and can typically involve a peripheral device with significantly slower operating characteristics as compared to the central subsystem, the performance of the entire data processing system can be impaired.

In order to maintain an efficient flow of information between the two subsystems, various techniques have been devised to improve the system performance. For example, priority assignments can be instituted in the central subsystem so that operations essential for the efficient operation of the central processing unit of the central subsystem are performed prior to the less essential operations. Similarly, look-ahead techniques can be implemented so that operations can be performed, such as data signal group transfers, prior to the requirement by the central subsystem, thereby permitting a non-essential operation to be performed during a period of relative inactivity.

A preprocessing technique is disclosed, for example, in the European patent application 29 177 with a peripheral controller providing a communication processing link between the central subsystem and the peripheral subsystem(s) and I/O devices to perform said preprocessing on incoming data, e.g. seismic data, to relieve the central subsystem of that task. There are no provision for an enhanced address handling to access the main memory without the intervention of the central subsystem.

From US patent 4,056,843 is it known to connect a plurality of channel processors between the central subsystem and the peripheral control units which control the operation of the I/O devices. There is provided a first channel processor for controlling signal transfers between channel storage and system storage and a second channel processor for controlling signal transfers between I/O devices and channel storage. Data signal transfers are thus effected in a two-stage operation mode.

US patent 4,092,715 discloses an I/O control unit providing a data transfer link between the data bus to which the central subsystem is connected and the peripheral subsystem control units of the I/O bus. Said I/O control unit is provided with addressing capability for addressing and accessing the main memory of the central subsystem without the intervention of the central processing system. Any information signals (data and control signals) flowing to or from the central subsystem are transmitted over the data bus which constitutes some kind of a data throughput bottle-neck. This transmission mode thus impairs the overall data transfer efficiency of the system as a whole.

While these techniques and others have been implemented, the ever-increasing speed of the central processing unit has led to a requirement of increasing efficiency of operations involving the central subsystem and peripheral subsystems.

It is therefore an object of the present invention to provide an improved I/O controller for coupling the central subsystem and the peripheral subsystem of a data processing system.

Accordingly, the present invention provides an I/O controller for coupling one or more central subsystems to a plurality of peripheral subsystems comprising components, structure and function as specified in the characterizing part of claim 1.

A data processing system embodying the present invention will now be described, by way of example, with reference to the drawings, in which:

Figure 1 is a schematic block diagram of a typical data processing system;

Figure 2 is a schematic block diagram of the input/output controller;

Figure 3 is a flow diagram of the operation for transferring data from a predetermined peripheral subsystem to the central subsystem; and

Figure 4 is a schematic diagram of files stored in the central subsystem that are required for the data transfer operation.

Note: In the following description the term "multiplexer" is frequently used synonymously for "controller" to somewhat specify the function performed.

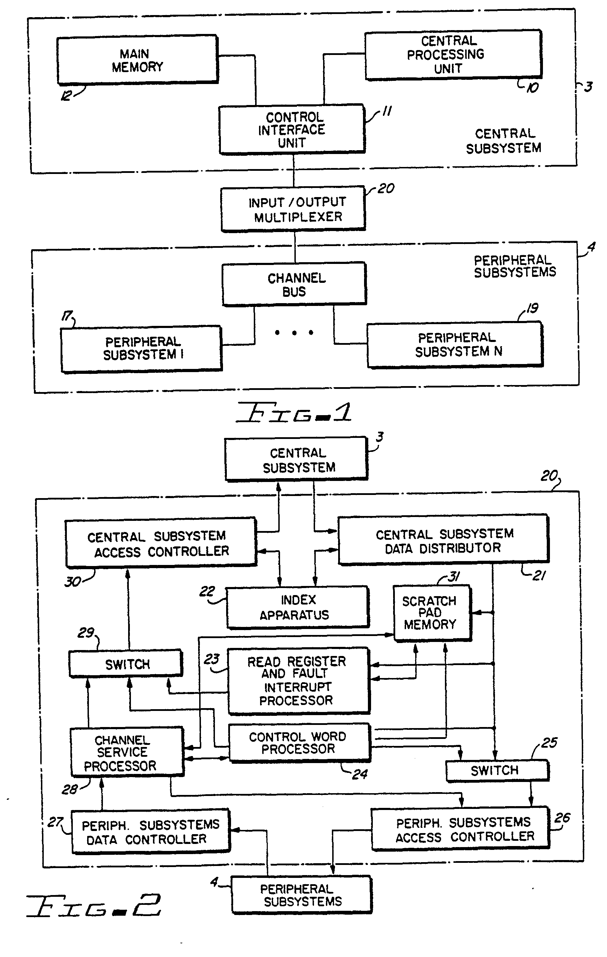

Figure 1 shows the components of a typical data processing system. The central subsystem 3 includes a central processing unit 10 in which signal manipulation is typically performed, a main memory 12 in which the signals required by the central processing unit are stored, and a control interface unit 11 for controlling the transfer of signals to the central processing unit and for controlling the exchange of signals between the central subsystem and the remainder of the data processing system.

The peripheral subsystems 4 comprise at least one peripheral subsystem and a channel bus for providing control apparatus for the peripheral subsystem(s). From the perspective of the central subsystem, a particular peripheral subsystem is identified by its location on a channel bus. This identification can be referred to as a peripheral subsystem number. In addition, provision can be made to expand the number of peripheral subsystems by coupling more channel buses in parallel with the original channel bus. In that case, a particular peripheral subsystem can be identified by a channel bus number and a peripheral subsystem number. Insofar as the input/output multiplexer is concerned, the combined channel bus and peripheral subsystem numbers are utilized as address identifiers and are associated with a single peripheral subsystem.

The input/output multiplexer 20 couples the peripheral subsystems and the central subsystem. In addition to the possibility of coupling to a plurality of channel buses, the input/output multiplexer can be adapted to couple to a plurality of central subsystems, not shown, through the use of a plurality of control interface units.

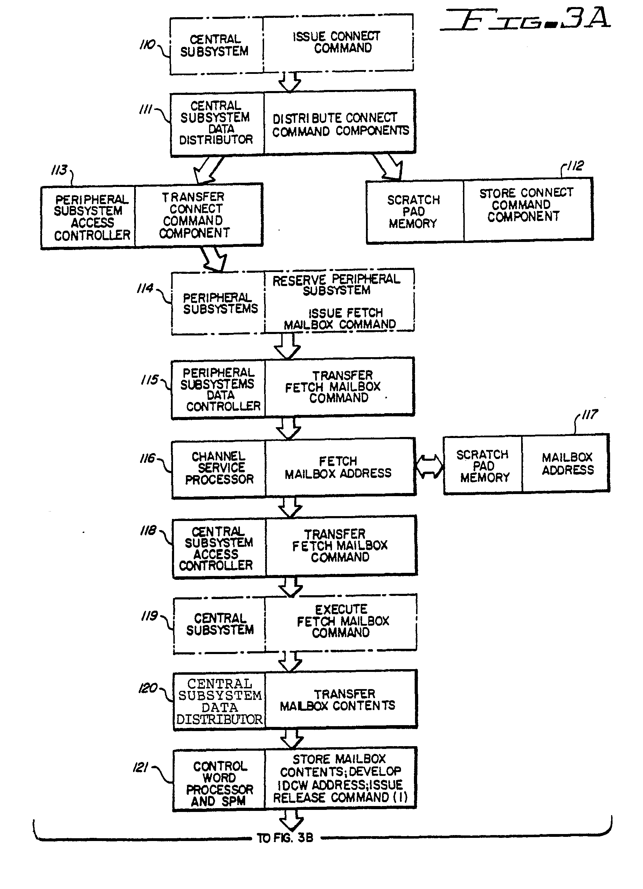

Figure 2 shows the components of an input/output multiplexer 20. The central subsystem data distributor 21 is coupled to the central subsystem 3 and is the mechanism for the receipt of signals from the central subsystem. The central subsystem data distributor 21 is coupled to index apparatus 22, read register and fault processor 23, control word processor 24, switch 25 and scratch pad memory 31. Switch 25 is coupled to the peripheral subsystem access controller 26, read register and fault interrupt processor 23, and control word processor 24. The peripheral subsystem access controller 26 applies input/output multiplexer signal groups to the peripheral subsystem 4. The peripheral subsystem 4 applies signal groups to the peripheral subsystem data controller 27. The channel service processor 28 is coupled to peripheral subsystem data controller 27, control word processor 24, scratch pad memory 31, and switch 29. Switch 29 is coupled to control word processor 24, read register and fault interrupt processor 23 and central subsystem access controller 30. The central subsystem access controller 30 is coupled to index apparatus 22 and applies input/output multiplexer signal groups to central subsystem 3.

The interaction between the central subsystem and the peripheral subsystem is accomplished by a series of commands. Each of the commands can flow through the input/output multiplexer in a manner which does not interfere with other commands in the multiplexer. Thus a set of central subsystems input/output multiplexer interactions can be in independent execution. It is necessary for certain circuits to prevent the simultaneous execution of commands by a multiplexer component; therefore interface control circuits are provided for selected components to ensure there is no detrimental overlap of operation. The interface control circuits can also contain priority networks to ensure that the most essential commands are executed as quickly as possible. However, during an operation, the associated peripheral subsystem is reserved to the use of that operation.

The operation of the input/output multiplexer will first be summarized. The main data and control signal paths from the central subsystem 3 to the peripheral subsystems 4 is through the central subsystem data distributor 21 and through the peripheral subsystems access controller 26. The main data and control signal path from the peripheral subsystems 4 to the central subsystem is through the peripheral subsystem data controller 27, the channel service processor 28, and the central subsystem access controller 30.

In the present system, the scratch pad memory 31 is available to store signals necessary for interaction between the central subsystem and the peripheral subsystems. These signal groups are available to the channel service processor, control word processor and the read register and fault interrupt processor. In the present system, duplicate files from the central subsystem are transferred to the scratch pad memory. A control word processor 24 with arithmetic capability is provided for address development in the input/output multiplexer rather than in the central subsystem. The developed addresses are utilized to address the appropriate locations in either the central subsystem or in the peripheral subsystems. The data developed by the control word processor is stored in the scratch pad memory for delivery to the channel service processor or to the peripheral subsystems access controller. In addition, the manipulative capacity of the control word processor can be utilized to provide commands directly to the central subsystem via the central subsystem access controller, rather than through the channel service processor.

The read register and fault interrupt processor 23 receives signals from the central subsystem data distributor and delivers signals to the central subsystem access controller or to the peripheral subsystems access controller. The register and fault processor 23 provide certain maintenance and decision making capability that is not utilized in normal operation executions, i.e., for the data transfer type operations described previously.

The channel service processor has decision making capabilities, such as determining when signal groups should be retrieved from the scratch pad memory. In addition, for large blocks of data transfer, the channel service processor determines when the correct amount of data has been transferred.

As will be clear, with a multiplicity of operations in concurrent execution, the possibility of overlapping demands on the central subsystem access controller and on the peripheral subsystem access controller is present. Thus, switch 25 and switch 29 have been added to the input/output multiplexer to ensure that the integrity of signal groups is maintained, and demands on the switch component are prioritized to resolve conflicting requirements.

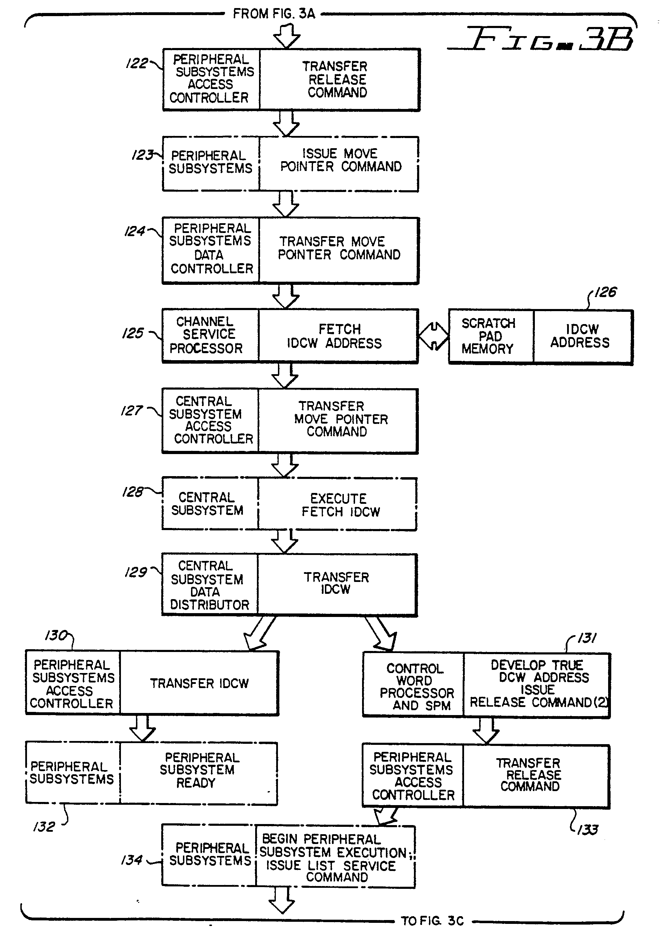

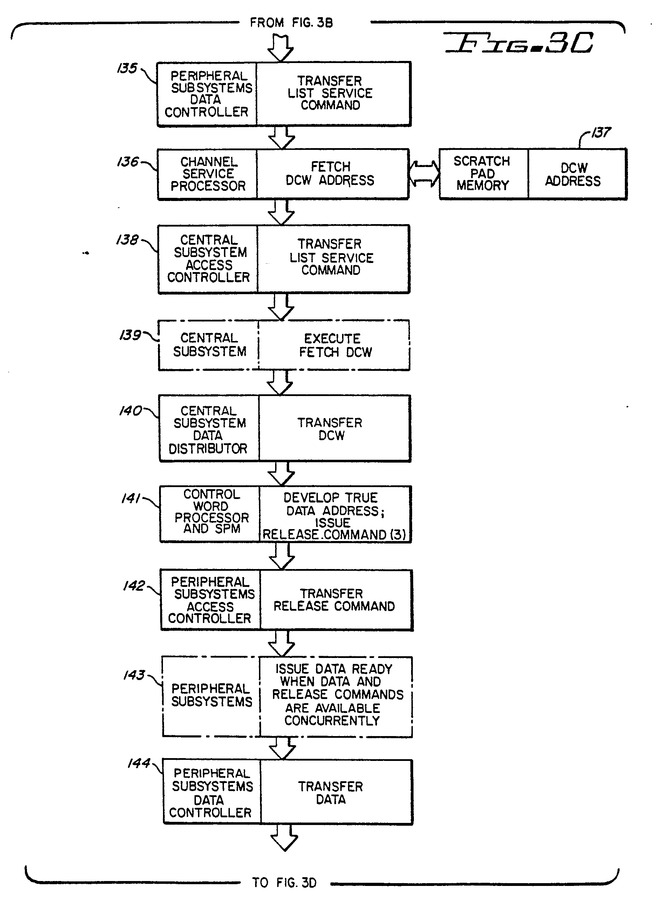

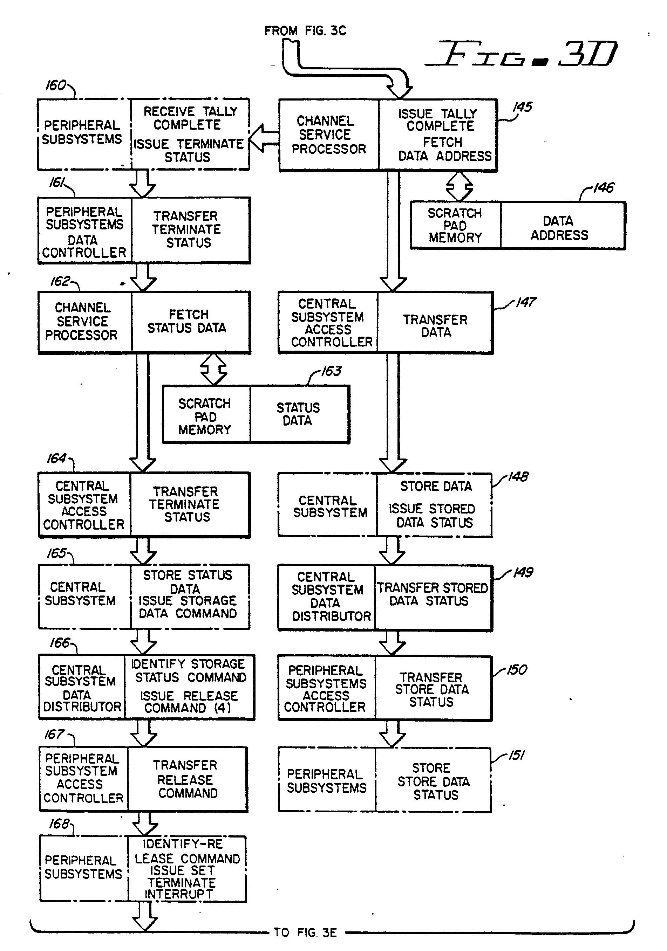

Figure 3 is a detailed example of the implementation of an operation transferring data from a predetermined location in a peripheral subsystem. This implementation is composed of a multiplicity of activities and commands involving the various components of the input/output multiplexer. Those activities performed by the components on the input/output multiplexer are shown in solid boxes, while the activities performed by the peripheral subsystems or the central subsystems are shown in broken-line boxes. In response to the requirement by the central subsystem for signal groups currently in the predetermined peripheral subsystem by the central subsystem, the related central subsystem files are prepared and stored in memory locations. Upon completion of the preparation of the files, the central subsystem issues a signal group, referred to as a connect command 110. For simplicity, reference will only be made hereafter to the command name or to the signal group identification (i.e., mailbox address). It will be understood that those identifications refer to signal groups of pre-established formats.

The connect command is issued (110) by the central subsystem to the central subsystem data distributor. The central subsystem data distributor transfers (111) components of the connect command to components of the input/output multiplexer. A first component of the connect command is stored (112) in the scratch·pad memory and a second portion is transferred (113) to the peripheral subsystem access controller. The second component of the connect command is then transferred (114) to the peripheral subsystem where the predetermined peripheral subsystem is reserved (i.e., made unavailable to respond to other connect commands) and a fetch mailbox command is issued. The fetch mailbox command is transferred (115) through the peripheral subsystem data controller to the channel service processor. The mailbox address in the central subsystem, part of the stored component of the connect command, is retrieved (116, 117) from the scratch pad memory, and a resulting command is transferred (118) through the central subsystem access controller to the central subsystem where the fetch mailbox command is executed (119).

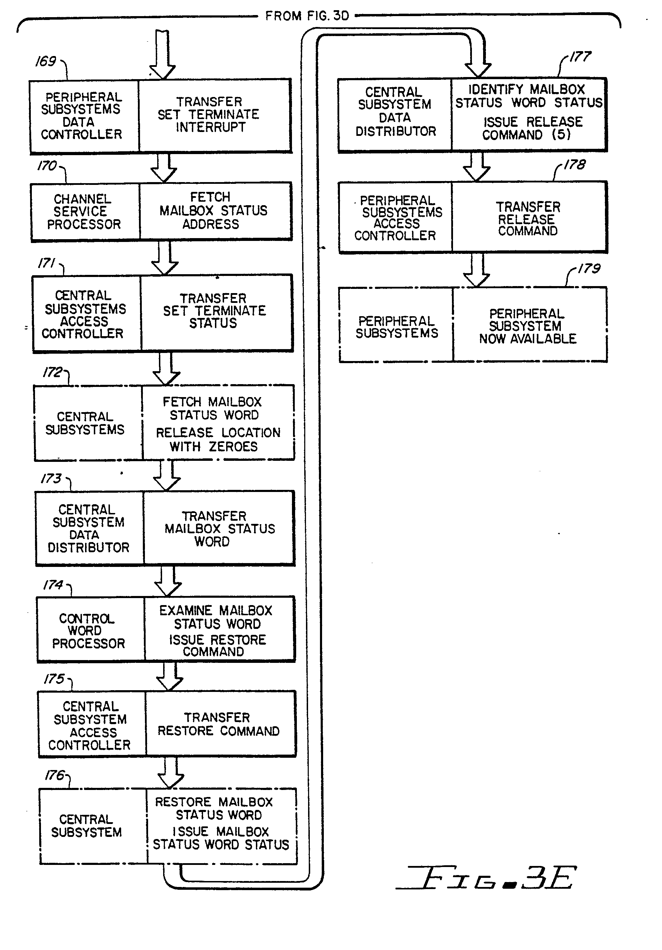

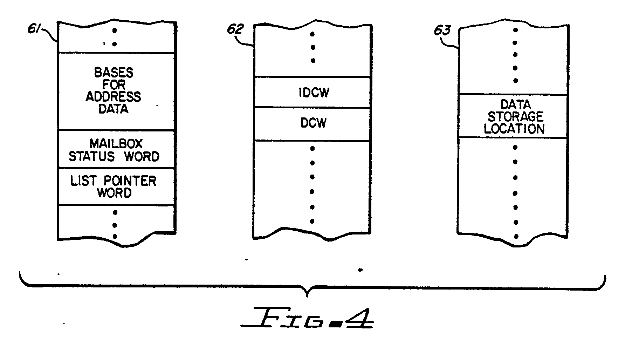

Referring briefly to Figure 4, a summary of the various files constructed by the operating system and contained in the central subsystem is shown. File 61 is referred to as the mailbox and includes, in consecutive memory locations, a plurality of bases for obtaining real address signal groups from the logical address signal groups utilized by the central subsystem, a mailbox status signal group and list pointer word signal group. The list pointer word signal group, after predetermined manipulation, provides the address 62 of the instruction data control word signal group (IDCW) and following in a consecutive memory location the data control word signal group (DCW). The data control word signal group, after appropriate manipulation, provides the address 63 of the data storage location (i.e., the address into which the first of the peripheral subsystem data words is to be stored).

Returning to Figure 3, the mailbox signal group is transferred (120) via the central subsystem data distributor to the control word processor and the scratch pad memory where the mailbox signals are stored. The control word processor, utilizing the mailbox contents, develops the real address of the instruction data control word and stores this real address in the scratch pad memory. Upon completion of the address development, a release command (1) is issued (121).

The release command is transferred (122) via the peripheral subsystem access controller to the peripheral subsystems. The peripheral subsystem in response to the release command (1) issues (123) a move pointer command. The move pointer command is transferred (124) through the peripheral subsystem data controller to the channel service processor. In the channel service processor, the real IDCW address is retrieved (125, 126) from the scratch pad memory and a resulting signal group is transferred (127) through the central subsystem access controller to the central subsystem.

In response to the data signals, the IDCW is retrieved (128) from files in the central subsystem and transferred (129) via the central subsystem data distributions to the control word processor and the scratch pad memory and (130) through the peripheral subsystems access controller to the peripheral subsystems (132). The receipt of the IDCW signal group by the peripheral subsystems is the last signal group necessary for execution of the data retrieval from the predetermined peripheral subsystem. However, the peripheral subsystem does not execute the retrieval immediately. In the control word processor, the IDCW causes the DCW to be developed (131) and stored in the scratch pad memory and a release command (2) delivered (133) through the peripheral subsystem access controller to the subsystem. Upon receipt of the release command (2) indicating the availability of the DCW address, the predetermined peripheral subsystem begins to execute (134) the retrieval of the data signal groups required by the central subsystem, and, concurrent with the execution, a list service command is issued.

The list service command is transferred (135) via the peripheral subsystem data controller to the channel service processor. In the channel service processor, the developed DCW address is retrieved (136, 137) from the scratch pad memory, and the list service command is transferred (138) via the central subsystem access controller to the central subsystem. In the central subsystem, the DCW address is retrieved (139) from memory in response to the signal groups.

The DCW address is transferred (140) via the central subsystem data distributor to the control word processor and the scratch pad memory. In the control word processor, the true address of the location in the central subsystem into which the data, retrieved from the predetermined peripheral subsystem is to be stored, is developed (141). After development of the address, the control word processor issues release command (3). The release commande is transferred (142) via peripheral subsystem access controller to the peripheral subsystem (143).

When the peripheral subsystems have received the release command and the data is available from the predetermined peripheral subsystem, a data ready signal is issued to the input/output multiplexer. The receipt of the data ready signal causes the accumulated data signal groups to be transferred (144) through the peripheral subsystem data controller to the channel service processor. The channel service processor retrieves (145, 146) the data address from the scratch pad memory. The data is transferred (147) through the central subsystem access controller to the central subsystem. In the central subsystem, the data signal groups are stored (148) in the appropriate address. After storage of the signal groups, a stored data status command is transferred (149) via the central subsystem data distributor and transferred (150) through the peripheral subsystem access controller to the peripheral subsystems where the stored data status command (i.e., signal group) is stored (151).

Concurrent with the retrieval (145) of the data address, the channel service processor issues a tally complete signal to the peripheral subsystems. The peripheral subsystems generate (160) a terminate interrupt command. The peripheral subsystems data controller transfers (161) the terminate interrupt command to the channel service processor. The channel service processor retrieves (162, 163) status data from the scratch pad memory and the status data becomes part of the terminate interrupt command. The terminate interrupt status command is transferred (164) via control subsystem access controller to the central subsystem.

The central subsystem stores (165) portions of the terminate interrupt status command and issues a storage data command. The central subsystem data distributor identifies (166) the storage data command and issues release command (4). The peripheral subsystem access controller transfers (167) the release control command to the peripheral subsystems. The peripheral subsystems identify (168) the release command and issues a set terminate interrupt command. The set terminate interrupt command is transferred (169) via the peripheral subsystems data controller to the channel service processor. The channel service processor obtains (170) the mailbox status address from the scratch pad memory. The central subsystem access controller transfers (171) the set terminate interrupt to the central subsystem.

The central subsystem retrieves (172) the mailbox status word. The mailbox status word is then transferred (173) via the central subsystem data distributor to the control word processor and the scratch pad memory. The control word processor examines (174) the mailbox status word and issues a restore command which is transferred (175) to the central subsystem via the central subsystem access controller. The central subsystem restores (176) the mailbox status word and issues a mailbox status word status command. The central subsystem data distributor identifies (177) the mailbox status word and issues a release command (5). The release command is transferred (178) via the peripheral subsystem access controller to the peripheral subsystem. The predetermined peripheral subsystem, in response to the release command, is now made available (179) for another operation.

**Claims**

1. An input/output controller (20) operatively connected to a central subsystem (3) and at least one peripheral subsystem (4) for exchanging data signal groups between said central subsystem (3) and a selected peripheral subsystem (4) as a result of an exchange of control signal groups, comprising first path means (21, 25, 26) through which signal groups including control signal groups and data signal groups can flow from the central subsystem (3) to the selected peripheral subsystem (4), and second path means (27, 29, 30) through which signal groups can flow from the selected peripheral subsystem (4) to the central subsystem (3), characterized by

(a) a central subsystem data distributor (21) for receiving data and control signal groups (111, 120, 129, 140, 149, 166, 173, 177) from said central subsystem (3) for said selected peripheral subsystem (4) to control distribution of said signal groups within said input/output controller (20);

(b) processor means (24, 28, 31) for receiving data and control signal groups from said central subsystem data distributor (21) to perform address preparation on selected control signal groups to provide address signal groups, said processor means including

(i) storage means (31) for storing control signal groups (112, 117, 121, 126, 131, 137, 141, 146, 163) representing address information relating to the central subsystem (3), said stored control signal groups include file signal groups from said central subsystem (3);

(ii) a control word processor (24) for producing real address signals (121, 131, 141) for the central subsystem (3) from logical address signals and the stored address information; and

(iii) a channel service processor (28) for incorporating (116, 125, 136, 145, 162, 170) the real address signals in information flowing through the second path means (27, 29, 30);

(c) a peripheral subsystems access controller (26) for receiving signal groups (113, 122, 130, 133, 142, 150, 167, 178) from said central subsystem data distributor (21) to deliver signal groups to selected peripheral subsystems (4);

(d) a peripheral subsystems data controller (27) for transferring signal groups (115, 124, 135, 144, 161, 169) from selected peripheral subsystems (4) to said central subsystem (3), said peripheral subsystems data controller (27) being operatively connected to said processor means (24, 28, 31) whereby said processor means provide said address signal groups determining a central subsystem storage location for said transferred signal groups, wherein each transfer of said signal groups from said selected peripheral subsystem (4) and each transfer of signal groups to said selected peripheral subsystem are performed in a predetermined sequence, but independently of prior signal group transfers; and

(e) a central subsystem access controller (30) for receiving signal groups from said peripheral subsystem data controller (27) and for transferring said signal groups (118, 127, 138, 147, 164, 171, 175) to said central subsystem (3) to be stored in a location determined by said access signal groups developed and provided by said processor means (24, 28, 31).

2. I/O controller according to claim 1, characterized in that different phases of a multiplicity of signal group transactions relating to different peripheral units can occur simultaneously in a multiplex fashion.

3. I/O controller according to claims 1 or 2, characterized in that the control word processor (24) in cooperation with the storage means (31) successively develops (121, 131, 141) the address signal groups (IDCW, DCW, true data address) of the location in the central subsystem (3) into which the data retrieved from the selected peripheral subsystem (4) is to be stored, and issues a release command (3) to cause (142, 143) the accumulated data signal groups to be transferred (144, 147) from the selected peripheral subsystem (4) via the peripheral subsystems data controller (27), channel service processor (28), central subsystem access controller (30) to the central subsystem (3), whereby the channel service processor (28) retrieves (145, 146) the data address from the storage means (31).

4. I/O controller according to claims 1 or 2 or 3, characterized in that the storage means (31) stores file signal groups developed in the central subsystem (3).

5. I/O controller according to claims 1 or 2, characterized in that the peripheral subsystems access controller (26) and the central subsystem access controller (30) are provided with first and second switches (25, 29) to ensure that the integrity of signal groups is maintained in concurrent execution of a multiplicity of signal group transfer operations with potential conflicting requirements.

6. I/O controller according to claims 2 or 5, characterized in that an interrupt processor (23) is operatively coupled with the central subsystem data distributor (21), the storage means (31), via first switch (29) to the central subsystem access controller (30), and via second switch (25) to the peripheral subsystems access controller (26), whereby said interrupt processor (23) receives signals from the central subsystem data distributor (21) and delivers signals to the central subsystem access controller (30) or to the peripheral subsystems access controller (26) to provide maintenance and decision making functions, such as fault interrupt, for the signal group transfer operations.

7. I/O controller according to claims 1 or 3 or 4, characterized by an index apparatus (22) to support address development by index manipulation, said index apparatus being operatively connected to and shared by both, the central subsystem data distributor (21) and the central subsystem access controller (30).

8. I/O controller according to either one of previous claims 1, 2, 3, 4 or 7, characterized in that said processor means (24, 28, 31) enable the storing (112, 117, 121) of file signal groups from the central subsystem (3) in response to a first preselected signal group (114, 115) from said selected peripheral subsystem (4), and enable the development of address signal groups (121, 131, 141) from said file signal groups, and subsequently enable the delivering (125, 127; 136, 138; 145, 147) of said address signal groups (126, 137, 146) to said second path means (30) in response to second preselected signal groups (123, 134, 143) to determine the location (146) where in said central subsystem (3) said data signal groups involved in said transfer (144, 147) are to be stored (148), said processor means (24, 28, 31) providing that said central subsystem data distributor (21) and said peripheral subsystems access controller (26) of said first path means operate independently of said peripheral subsystems data controller (27) and said central subsystem access controller (30) of said second path means.

9. Method for controlling the exchange of signal groups in an I/O controller according to either one of previous claims 1, 3, 4, 7 or 8, characterized by the following subsequent steps:

(a) upon receipt of a connect command (110) from the central subsystem (3), storing (112) a first portion of the connect command in the storage means (31), said first portion containing address information relating to file signal groups (61) within the central subsystem;

(b) transferring (113) a second portion of the connect command to the peripheral subsystem (4);

(c) upon receipt of a first fetch command (115) from the selected peripheral subsystem (4), transferring (118) to said central subsystem (3) the first fetch command with said first portion of the connect command included, thus identifying the address location of the file signal groups (61);

(d) upon successive receipt of the file signal groups (mailbox signals 119; IDCW 128, DCW 139) from the central subsystem (files 61, 62, 63 of Fig. 4), developing in an iterative mode the real address locations (IDCW 121, DCW 131, true data address 141) of the file signal groups (62, 63) within the central subsystem (3);

(e) issuing predetermed command control signal groups (1st, 2nd, 3rd release commands 121, 131, 141) in an iterative mode to said selected peripheral subsystem (4);

(f) upon successive receipt of said command control signal groups of step (e), transferring (127, 138, 147) in an iterative mode to said central subsystem (3) said command control signal groups with the real address locations of the file signal groups developed in step (d) included;

(g) transferring the received data (144), maintaining a tally of the data transferred (145), the data being transferred (147) with information specified in the file signal group (data address 146) and stored (148) in the addressed location of the central subsystem (3).

**Patentansprüche**

1. Eingabe/Ausgabe-Steuereinheit (20), welche betriebsfähig mit einem zentralen Teilsystem (3) und wenigstens einem peripheren Teilsystem (4) verbunden ist, um Datensignal-Gruppen zwischen dem zentralen Teilsystem (4) auszutauschen, und zwar als Ergebnis eines Austausches von Steuersignal-Gruppen mit einer ersten Pfadeeinrichtung (21, 25, 26), durch welche Signalgruppen einschließlich Steuersignal-Gruppen und Dateisignal-Gruppen aus dem zentralen Teil des Teilsystems (3) zu dem ausgewählten peripheren Teilsystem (4) fließen können, und einer zweiten Pfadeinrichtung (27, 29, 30), durch welche Signalgruppen von dem ausgewählten peripheren Teilsystem (4) zu dem zentralen Teilsystem (3) fließen können, gekennzeichnet durch

a) einen Zentralteilsystem-Datenverteiler (21) zum Empfangen von Daten und Steuersignal-Gruppen (111, 120, 129, 140, 149, 166, 173, 177) von dem zentralen Teilsystem (3), damit das ausgewählte periphere Teilsystem (4) die Verteilung der Signalgruppen innerhalb der Eingabe/Ausgabe-Steuereinheit (20) steuert;

b) eine Prozessoreinrichtung (24, 28, 31) zum Empfangen von Daten und Steuersignal-Gruppen von dem Zentralteilsystem-Datenverteiler (21), um auf ausgewählten Steuersignal-Gruppen eine Adressenvorbereitung durchzuführen, um Addressensignal-Gruppen zu liefern, wobei die Prozessoreinrichtung aufweist:

(i) eine Speichereinrichtung (31) zum Speichern von Steuersignal-Gruppen (112, 117, 121, 126, 131, 137, 141, 146, 163), welche Adresseninformationen darstellen, die das zentrale Teilsystem (3) betrifft, wobei die gespeicherten Steuersignal-Gruppen Dateisignal-Gruppen von dem zentralen Teilsystem (3) aufweisen;

(ii) einen Steuerwort-Prozessor (24) zum Erzeugen von Realadressen-Signalen (121, 131, 141) für das zentrale Teilsystem (3) aus logischen Adressensignalen und den gespeicherten Adresseninformationen; und

(iii) einen Kanaldienst-Prozessor (28) zum Einfügen (116, 125, 136, 145, 162, 170) der Realadreß-Signale in Informationen, welche durch die zweite Pfadeinrichtung (27, 29, 30) fließt;

c) eine periphere Teilsystem-Zugriffssteuereinheit (26) zum Empfangen von Signalgruppen (113, 122, 130, 133, 142, 150, 167, 178) von den Zentralteilsystem-Datenverteilern (21), um Signalgruppen an ausgewählte periphere Teilsysteme (6) abzugeben;

d) eine periphere Teilsystem-Datensteuereinheit (27) zum Übertragen von Signalgruppen (115, 124, 135, 144, 161, 169) von ausgewählten peripheren Teilsystemen (4) zu dem zentralen Teilsystem (3), wobei die periphere Teilsystem-Datensteuereinheit (27) betriebsfähig mit der Prozessoreinrichtung (24, 28, 31) verbunden ist, wobei die Prozessoreinrichtung die Adressensignal-Gruppen liefert, welche eine Zentralteilsystem-Speicherstelle für die übertragenen Signalgruppen bereitstellt, wobei jede Übertragung von den Signalgruppen zu dem ausgewählten peripheren Teil (4) und jede Übertragung der Signalgruppen zu dem ausgewählten peripheren Teilsystem in einer vorbestimmten Ordnung durchgeführt werden, aber unabhängig von vorausgegangenen Signalgruppen-Übertragungen;

e) eine Zentralteilsystem-Zugriffssteuereinheit (30) zum Empfangen von Signalgruppen von der Peripherteilsystem-Datensteuereinheit (27) und zum Übertragen der Signalgruppen (118, 127, 138, 147, 164, 171, 175) an das zentrale Teilsystem (3), damit sie an einer Stelle gespeichert werden, welche von den Zugriffssignal-Gruppen bestimmt wird, welche von der Prozessoreinrichtung (24, 28, 31) entwickelt und geliefert werden.

2. Eingabe/Ausgabe-Steuereinheit nach Anspruch 1, dadurch gekennzeichnet, daß verschiedene Phasen einer Multiplizität von Signalgruppen-Transaktionen, welche die verschiedenen peripheren Einheiten betreffen, gleichzeitig in einer multiplexen Weise auftreten können.

3. Eingabe/Ausgabe-Steuereinheit nach Anspruch 1 oder 2, dadurch gekennzeichnet, daß der Steuerbord-Prozessor (24) in Zusammenarbeit mit der Speichereinrichtung (31) sukzessive die Adressensignal-Gruppen (IDCW, DCW, wahre Datenadressen) der Stelle in dem zentralen Teilsystem (3) entwickelt, in der die Daten, welche von dem ausgewählten peripheren Teilsystem (4) wiedergefunden werden, zu speichern sind, und mit einem Freigabebefehl (3), um zu bewirken (142, 143) daß die angesammelten Datensignal-Gruppen (144, 147) von dem ausgewählte peripheren Teilsystem (4) über die Periphereteilsystem-Datensteuereinheit (27), den Kanaldienst-Prozessor (28), die Zentralteilsystem-Zugriffssteuereinheit (30) an das zentrale Teilsystem (3) übertragen werden, wobei der Kanaldienst-Prozessor (28) die Datenadresse aus der Speicheradresse (31) wiederfindet.

4. Eingabe/Ausgabe-Steuereinheit nach Ansprüchen 1 oder 2 oder 3, dadurch gekennzeichnet, daß die Speichereinrichtung (31) Dateisignal-Gruppen speichert, die in dem zentralen Teilsystem (3) entwickelt wurden.

5. Eingabe/Ausgabe-Steuereinheit nach Anspruch 1 oder 2, dadurch gekennzeichnet, daß die Periphereteilsystem-Zugriffssteuereinheit (26) und die Zentralteilsystem-Zugriffssteuereinheit (30) mit ersten und zweiten Schaltern (25, 29) versehen sind, um zu gewährleisten, daß der Zusammenhalt der Signalgruppen bei gleichzeitiger Ausführung einer Multiplizität von Signalgruppen-Übertragungsoperationen mit möglicherweise unverinbaren Anforderungen aufrechterhalten wird.

6. Eingabe/Ausgabe-Steuereinheit nach Ansprüchen 2 oder 5, dadurch gekennzeichnet, daß ein Interrupt-Prozessor (23) betriebsfähig mit den Zentralteilsystem-Datenverteilern (21) und die Speichereinrichtung (31) über einen ersten Schalter (29) mit der Zentralteilsystem-Zugriffssteuereinheit (30) gekoppelt ist, und über einen zweiten Schalter (25) mit der Periphereteilsystem-Zugriffssteuereinheit (26), wobei der Interrupt-Prozessor (23) Signale von dem Zentralteilsystem-Datenverteiler (21) empfängt und Signale an die Zentralteilsystem-Zugriffssteuereinheit (30) oder an die Periphereteilsystem-Zugriffsteuereinheit (26) liefert, um Aufrechterhaltungs- und Entscheidungsvornahme-Funktionen zur Verfügung zu stellen, z.B. als Fehler-Interrupt für die Signalgruppen-Übertragungsoperationen.

7. Eingabe/Ausgabe-Steuereinheit nach Ansprüchen 1 oder 3 oder 4 gekennzeichnet durch eine Indexvorrichtung (22), um Adressenentwicklung durch Indexmanipulation zu unterstützen, wobei die Indexvorrichtung mit dem Zentralteilsystem-Datenverteiler (21) und der Zentralteilsystem-Zugriffssteuereinheit (30) verbunden ist und von beiden geteilt wird.

8. Eingabe/Ausgabe-Steuereinheit nach einem der vorhergehenden Ansprüche 1, 2, 3, 4 oder 7, dadurch gekennzeichnet, daß die Prozessoreinrichtung (24, 28, 31) das Speichern (112, 117, 121) von Dateisignal-Gruppen aus dem zentralen Teilsystem (3) in Abhängigkeit von einer ersten vorgewählten Signalgruppen (114, 115) aus dem ausgewählten peripheren Teilsystem (4) ermöglicht, und die Entwicklung von Adressensignal-Gruppen (121, 131, 141) aus den Dateisignal-Gruppen ermöglicht, und nachfolgend die Abgabe (125, 127; 136, 138; 145, 147) von den Adressensignal-Gruppen (126, 137, 146) an die zweite Pfadeinrichtung (30) in Abhängigkeit von zweiten vorgewählten Signalgruppen (123, 134, 143) ermöglicht, um die Stelle (146) zu bestimmen, wo in dem zentralen Teilsystem (3) die Dateisignal-Gruppen, welche in die Übertragung (144, 147) verwickelt sind, gespeichert werden sollen (148), wobei die Prozessoreinrichtung (24, 28, 31) gewährleistet, daß der Zentralteilsystem-Datenverteiler (21) und die Periphereteilsystem-Zugriffssteuereinheit (26) der ersten Pfadeinrichtung unabhängig von der Periphereteilsystem-Datensteuereinheit (27) und der Zentralsystem-Zugriffssteuereinheit (30) der zweiten Pfadeinrichtung arbeiten.

9. Verfahren zum Steuern des Austausches von Signalgruppen in einer Eingabe/Ausgabe-Steuereinheit gem. einem der vorangegangenen Ansprüche 1, 3, 4, 7 oder 8 gekennzeichnet durch nachfolgende Schritte:

a) aus Empfang eines Verbindungsbefehls (110) von dem zentralen Teilsystem (3) Speichern (112) eines ersten Teils des Verbindungsbefehls in der Speichereinrichtung (31), wobei der erste Teil eine Adresseninformation enthält, die die Dateisignal-Gruppen (61) in dem zentralen Teilsystem betrifft;

b) Übertragen (113) eines zweiten Teils des Verbindungsbefehls an das periphere Teilsystem (4);

c) äuf Empfang eines ersten Fetch-Befehls (115) von dem ausgewählten peripheren Teilsystem (4) Übertragen (118) des ersten Fetch-Befehls mit dem eingeschlossenen ersten Teil des Verbindungsbefehls an das zentrale Teilsystem (3) und Identifizieren der Adressenstelle der Dateisignal-Gruppen (61);

d) auf sukzessiven Empfang der Dateisignal-Gruppen (mailbox-Signal 119; IDC 128, DCW 139) von dem zentralen Teilsystem (Dateien 61, 62, 63 von Fig. 4) Entwickeln der Realadressen-Stellen (IDCW 121, DCW 131, wahre Datenadressen 141) der Dateisignal-Gruppen (62, 63) in dem zentralen Teilsystem (3) in einem iterativen Modus;

e) Ausgeben von vorbestimmten Befehlssteuersignal-Gruppen (1., 2., 3. Freigabebefehl 121, 131, 141) in einem iterativen Modus an das Zentralteilsystem (3);

g) Übertragen der empfangenen Daten (144), Behalten einer Markierung der übertragenen Daten (145), wobei die Daten mit Information übertragen (147) werden, die in der Dateisignal-Gruppe (Datenadresse 146) spezifiert und an der adressierten Stelle des zentralen Teilsystem (3) gespeichert (148) ist.

**Revendications**

1. Contrôleur d'entrée/sortie (20) connecté activement à un sous-système central (3) et à au moins un sous-système périphérique (4) pour échanger des groupes de signaux de données entre le sous-système central (3) et un sous-système périphérique (4) sélectionné à la suite d'un échange de groupes de signaux de commande, comprenant un premier moyen d'acheminement (21, 25, 26) par lequel peuvent passer des groupes de signaux incluant des groupes de signaux de commande et des groupes de signaux de données du sous-système central (3) au sous-système périphérique (4) sélectionné, et un deuxième moyen d'acheminement (27, 29, 30) par lequel peuvent passer des groupes de signaux du sous-système périphérique (4) sélectionné au sous-système central (3), caractérisé par

(a) un répartiteur de données de sous-système central (21) pour recevoir des groupes de signaux de données et de commande (111, 120, 129, 140, 149, 166, 173, 177) du sous-système central (3) destinés au sous-système périphérique (4) sélectionné afin de commander la répartition des groupes de signaux dans le contrôleur d'entrée/sortie (20);

(b) un moyen de traitement (24, 28, 31) pour recevoir des groupes de signaux de données et de commande du répartiteur de données de sous-système central (21) afin d'exécuter une préparation d'adresse sur les groupes de signaux de commande sélectionnés pour fournir des groupes de signaux d'adresse, le moyen de traitement incluant

(i) un moyen de mémorisation (31) pour mémoriser des groupes de signaux de commande (112, 117, 121, 126, 131, 137, 141, 146, 163) représentant des informations d'adresse relatives au sous-système central (3), les groupes de signaux de commande mémorisés incluant des groupes de signaux de fichier provenant du sous-système central (3);

(ii) un moyen de traitement de mots de commande (24) pour produire des signaux d'adresse réelle (121, 131, 141) pour le sous-système central (3) à partir de signaux d'adresse logique et des informations d'adresse mémorisées; et

(iii) un moyen de traitement de prise en charge de canal (28) pour incorporer (116, 125, 136, 145, 162, 170) les signaux d'adresse réelle dans les informations passant par le le deuxième moyen d'acheminement (27, 29, 30);

(c) un contrôleur d'accès aux sous-systèmes périphériques (26) pour recevoir des groupes de signaux (113, 122, 130, 133, 142, 150, 167, 178) du répartiteur de données de sous-système central (21) afin de délivrer des groupes de signaux aux sous-systèmes périphériques (4) sélectionnés;

(d) un contrôleur de données de sous-systèmes périphériques (27) pour transférer des groupes de signaux (115, 124, 135, 144, 161, 169) des sous-systèmes périphériques (4) sélectionnés au sous-système central (3), le contrôleur de données de sous-systèmes périphériques (27) étant connecté activement au moyen de traitement (24, 28, 31) pour que ce moyen de traitement fournisse les groupes de signaux d'adresse déterminant un emplacement de mémoire de sous-système central pour les groupes de signaux transférés, dans lequel chaque transfert des groupes de signaux du sous-système périphérique (4) sélectionnné et chaque transfert des groupes de signaux au sous-système périphérique sélectionné sont exécutés dans une séquence prédéterminée, mais indépendamment des transferts de groupes de signaux antérieurs; et

(e) un contrôleur d'accès au sous-système central (30) pour recevoir des groupes de signaux du contrôleur de données de sous-systèmes périphériques (27) et pour transférer les groupes de signaux (118, 127, 138, 147, 164, 171, 175) au sous-système central (3) à mémoriser dans un emplacement déterminé par les groupes de signaux d'accès produits et fournis par le moyen de traitement (24, 28, 31).

2. Contrôleur d'entrée/sortie selon la revendication 1, caractérisé en ce que différentes phases d'un ensemble de mouvements de groupes de signaux relatifs à différentes unités périphériques peuvent se produite simultanément en multiplex.

3. Contrôleur d'entrée/sortie selon l'une quelconque des revendications 1 et 2, caractérisé en ce que le moyen de traitement de mots de commande (24) en coopération avec le moyen de mémorisation (31) produit successivement (121, 131,141) les groupes de signaux d'adresse (IDCW, DCW, adresse de données vraie) de l'emplacement dans le sous-système central (3) où les données extraite du sous-système périphérique (4) sélectionné doivent être mémorisées, et émet une commande de diffusion (3) pour faire en sorte (142, 143) que les groupes de signaux de données accumulées soient transférés (144, 147) du sous-système périphérique (4) sélectionné par l'intermédiaire du contrôleur de données de sous-systèmes périphériques (27), du moyen de traitement de prise en charge de canal (28), du contrôleur d'accès au sous-système central (30) au sous-système central (3), le moyen de traitement de prise en charge de canal (28) extrayant ainsi (145, 146) l'adresse de données du moyen de mémorisation (31).

4. Contrôleur d'entrée/sortie selon l'une quelconque des revendications 1 à 3, caractérisé en ce que le moyen de mémorisation (31) mémorise des groupes de signaux de fichier produits dans le sous-système central (3).

5. Contrôleur d'entrée/sortie selon l'une quelconque des revendications 1 et 2, caractérisé en ce que le contrôleur d'accès aux sous-systèmes périphériques (26) et le contrôleur d'accès au sous-système central (30) sont pourvus de premier et deuxième commutateurs (25, 29) pour garantir que l'intégrité des groupes de signaux est maintenue pendant l'exécution simultanée d'un ensemble d'opérations de transfert de groupes de signaux avec des exigences opposées potentielles.

6. Contrôleur d'entrée/sortie selon l'une quelconque des revendications 2 et 5, caractérisé en ce qu'on moyen de traitement d'interruption (23) est couplé activement au répartiteur de données de sous-système central (21), au moyen de mémorisation (31), par le premier commutateur (29) au contrôleur d'accès au sous-système central (30), et par le deuxième commutateur (25) au contrôleur d'accès aux sous-systèmes périphériques (26), le moyen de traitement d'interruption (23) recevant de la sorte des signaux du répartiteur de données de sous-système central (21) et délivrant des signaux au contrôleur d'accès au sous-système central (30) ou au contrôleur d'accès aux sous-systèmes périphériques (26) pour remplir des fonctions de maintenance et de prise de décision, telles qu'une interruption en cas de défaut, pour les opérations de transfert de groupes de signaux.

7. Contrôleur d'entrée/sortie selon l'une quelconque des revendications 1, 3 et 4, caractérisé par un dispositif d'indexation (22) pour supporter un développement d'adresse par un traitement d'index, le dispositif d'indexation étant connecté activement à et partagé à la fois par le répartiteur de données de sous-système central (21) et le contrôleur d'accès au sous-système central (30).

8. Contrôleur d'entrée/sortie selon l'une quelconque des revendications 1 à 4 et 7, caractérisé en ce que le moyen de traitement (24, 28, 31) permet la mémorisation (112, 117, 121) de groupes de signaux de fichier provenant du sous-système central (3) en réponse à un premier groupe de signaux présélectionné (114, 115) provenant du sous-système périphérique (4) sélectionné, et permet la production de groupes de signaux d'adresse (121, 131, 141) à partir des groupes de signaux de fichier, et permet ensuite la délivrance (125, 127; 136, 138; 145, 147) des groupes de signaux d'adresse (126, 137, 146) au deuxième moyen d'acheminement (30) en réponse à des deuxièmes groupes de signaux présélectionnés (123, 134, 143) pour déterminer l'emplacement (146) dans lequel doivent être mémorisés (148) dans le sous-système central (3) les groupes de signaux de données impliqués dans le transfert (144, 147), le moyen de traitement (24, 28, 31) garantissant que le répartiteur de données de sous-système central (21) et le contrôleur d'accès aus sous-systèmes périphériques (26) du premier moyen d'acheminement fonctionnent indépendamment du contrôleur d'accès aux sous-systèmes périphériques (27) et du contrôleur d'accès au sous-système central (30) du deuxième moyen d'acheminement.

9. Procédé pour contrôleur l'échange de groupes de signaux dans un contrôleur d'entrée/sortie selon l'un quelconque des revendications 1, 3, 4, 7 et 8, caractérisé en ce qu'il consiste à:

(a) à la réception d'une commande de connexion (110) provenant du sous-système central (3), mémoriser (112) une première partie de la commande de connexion dans le moyen de mémorisation (31), la première partie contenant des informations d'adresse relatives à des groupes de signaux de fichier (61) dans le sous-système central;

(b) transférer (113) une deuxième partie de la commande de connexion au sous-système périphérique (4);

(c) à la réception d'une première commande d'extraction (115) du sous-système périphérique sélectionné (4), transférer (118) au sous-système central (3) la première commande d'extraction y compris la première partie de la commande de connexion, en identifiant ainsi l'emplacement d'adresse des groupes de signaux de fichier (61);

(d) à la réception successive des groupes de signaux de fichier (signaux de boîte à lettres 119; IDCW 128, DCW 139) du sous-système central (fichiers 61, 62, 63 de la Figure 4), développer dans un mode itératif les emplacements d'adresse réelle (IDCW 121, DCW 131, adresse de données vraie 141) des groupes de signaux de fichier (62, 63) dans le sous-système central (3);

(e) émettre des groupes de signaux de commande de commandes prédéterminées (1$^{ère}$, 2$^{ième}$, 3$^{ième}$ commandes 121, 131, 141) dans un mode itératif destinés au sous-système périphérique (4) sélectionné;

(f) à la réception successive des groupes de signaux de commande de commandes de l'opération (e), transférer (127, 138, 147) dans un mode itératif au sous-système central (3) les groupes de signaux de commande de commandes avec les emplacements d'adresse réelle des groupes de signaux de fichier produits dans l'opération (d) incluse: et à

(g) transférer les données reçues (144), maintenir un comptage des données transférées (145), les données étant transférées (147) avec les informations spécifiées dans le groupe de signaux de fichier (adresse de données 146) et mémorisées (148) à l'emplacement adressé du sous-système central (3).

*FIG-1*

*FIG-2*

EP 0 088 838 B1

# Fig. 3A

110 | CENTRAL SUBSYSTEM | ISSUE CONNECT COMMAND

111 | CENTRAL SUBSYSTEM DATA DISTRIBUTOR | DISTRIBUTE CONNECT COMMAND COMPONENTS

113 | PERIPHERAL SUBSYSTEM ACCESS CONTROLLER | TRANSFER CONNECT COMMAND COMPONENT

112 | SCRATCH PAD MEMORY | STORE CONNECT COMMAND COMPONENT

114 | PERIPHERAL SUBSYSTEMS | RESERVE PERIPHERAL SUBSYSTEM / ISSUE FETCH MAILBOX COMMAND

115 | PERIPHERAL SUBSYSTEMS DATA CONTROLLER | TRANSFER FETCH MAILBOX COMMAND

116 | CHANNEL SERVICE PROCESSOR | FETCH MAILBOX ADDRESS

117 | SCRATCH PAD MEMORY | MAILBOX ADDRESS

118 | CENTRAL SUBSYSTEM ACCESS CONTROLLER | TRANSFER FETCH MAILBOX COMMAND

119 | CENTRAL SUBSYSTEM | EXECUTE FETCH MAILBOX COMMAND

120 | CENTRAL SUBSYSTEM DATA DISTRIBUTOR | TRANSFER MAILBOX CONTENTS

121 | CONTROL WORD PROCESSOR AND SPM | STORE MAILBOX CONTENTS; DEVELOP IDCW ADDRESS; ISSUE RELEASE COMMAND (1)

TO FIG. 3B

2

FROM FIG. 3A

_FIG-3B_

| 122 | PERIPHERAL SUBSYSTEMS ACCESS CONTROLLER | TRANSFER RELEASE COMMAND |

| 123 | PERIPHERAL SUBSYSTEMS | ISSUE MOVE POINTER COMMAND |

| 124 | PERIPHERAL SUBSYSTEMS DATA CONTROLLER | TRANSFER MOVE POINTER COMMAND |

| 125 | CHANNEL SERVICE PROCESSOR | FETCH IDCW ADDRESS |

| 126 | SCRATCH PAD MEMORY | IDCW ADDRESS |

| 127 | CENTRAL SUBSYSTEM ACCESS CONTROLLER | TRANSFER MOVE POINTER COMMAND |

| 128 | CENTRAL SUBSYSTEM | EXECUTE FETCH IDCW |

| 129 | CENTRAL SUBSYSTEM DATA DISTRIBUTOR | TRANSFER IDCW |

| 130 | PERIPHERAL SUBSYSTEMS ACCESS CONTROLLER | TRANSFER IDCW |

| 131 | CONTROL WORD PROCESSOR AND SPM | DEVELOP TRUE DCW ADDRESS ISSUE RELEASE COMMAND (2) |

| 132 | PERIPHERAL SUBSYSTEMS | PERIPHERAL SUBSYSTEM READY |

| 133 | PERIPHERAL SUBSYSTEMS ACCESS CONTROLLER | TRANSFER RELEASE COMMAND |

| 134 | PERIPHERAL SUBSYSTEMS | BEGIN PERIPHERAL SUBSYSTEM EXECUTION; ISSUE LIST SERVICE COMMAND |

TO FIG. 3C

3

FROM FIG. 3B

$\mathcal{F}_{IG}$.3C

135 — PERIPHERAL SUBSYSTEMS DATA CONTROLLER | TRANSFER LIST SERVICE COMMAND

136 — CHANNEL SERVICE PROCESSOR | FETCH DCW ADDRESS

137 — SCRATCH PAD MEMORY | DCW ADDRESS

138 — CENTRAL SUBSYSTEM ACCESS CONTROLLER | TRANSFER LIST SERVICE COMMAND

139 — CENTRAL SUBSYSTEM | EXECUTE FETCH DCW

140 — CENTRAL SUBSYSTEM DATA DISTRIBUTOR | TRANSFER DCW

141 — CONTROL WORD PROCESSOR AND SPM | DEVELOP TRUE DATA ADDRESS; ISSUE RELEASE.COMMAND (3)

142 — PERIPHERAL SUBSYSTEMS ACCESS CONTROLLER | TRANSFER RELEASE COMMAND

143 — PERIPHERAL SUBSYSTEMS | ISSUE DATA READY WHEN DATA AND RELEASE COMMANDS ARE AVAILABLE CONCURRENTLY

144 — PERIPHERAL SUBSYSTEMS DATA CONTROLLER | TRANSFER DATA

TO FIG. 3D

4

FROM FIG. 3C

*Fig. 3D*

**160**
| PERIPHERAL SUBSYSTEMS | RECEIVE TALLY COMPLETE / ISSUE TERMINATE STATUS |

**145**
| CHANNEL SERVICE PROCESSOR | ISSUE TALLY COMPLETE / FETCH DATA ADDRESS |

**146**
| SCRATCH PAD MEMORY | DATA ADDRESS |

**161**
| PERIPHERAL SUBSYSTEMS DATA CONTROLLER | TRANSFER TERMINATE STATUS |

**162**
| CHANNEL SERVICE PROCESSOR | FETCH STATUS DATA |

**147**
| CENTRAL SUBSYSTEM ACCESS CONTROLLER | TRANSFER DATA |

**163**
| SCRATCH PAD MEMORY | STATUS DATA |

**164**
| CENTRAL SUBSYSTEM ACCESS CONTROLLER | TRANSFER TERMINATE STATUS |

**148**
| CENTRAL SUBSYSTEM | STORE DATA / ISSUE STORED DATA STATUS |

**165**
| CENTRAL SUBSYSTEM | STORE STATUS DATA / ISSUE STORAGE DATA COMMAND |

**149**
| CENTRAL SUBSYSTEM DATA DISTRIBUTOR | TRANSFER STORED DATA STATUS |

**166**
| CENTRAL SUBSYSTEM DATA DISTRIBUTOR | IDENTIFY STORAGE STATUS COMMAND / ISSUE RELEASE COMMAND (4) |

**150**
| PERIPHERAL SUBSYSTEMS ACCESS CONTROLLER | TRANSFER STORE DATA STATUS |

**167**
| PERIPHERAL SUBSYSTEM ACCESS CONTROLLER | TRANSFER RELEASE COMMAND |

**151**
| PERIPHERAL SUBSYSTEMS | STORE STORE DATA STATUS |

**168**
| PERIPHERAL SUBSYSTEMS | IDENTIFY-RELEASE COMMAND / ISSUE SET TERMINATE INTERRUPT |

TO FIG. 3E

FROM FIG. 3D

*169*

| PERIPHERAL SUBSYSTEMS DATA CONTROLLER | TRANSFER SET TERMINATE INTERRUPT |
|---|---|

*170*

| CHANNEL SERVICE PROCESSOR | FETCH MAILBOX STATUS ADDRESS |
|---|---|

*171*

| CENTRAL SUBSYSTEMS ACCESS CONTROLLER | TRANSFER SET TERMINATE STATUS |
|---|---|

*172*

| CENTRAL SUBSYSTEMS | FETCH MAILBOX STATUS WORD RELEASE LOCATION WITH ZEROES |
|---|---|

*173*

| CENTRAL SUBSYSTEM DATA DISTRIBUTOR | TRANSFER MAILBOX STATUS WORD |
|---|---|

*174*

| CONTROL WORD PROCESSOR | EXAMINE MAILBOX STATUS WORD ISSUE RESTORE COMMAND |
|---|---|

*175*

| CENTRAL SUBSYSTEM ACCESS CONTROLLER | TRANSFER RESTORE COMMAND |
|---|---|

*176*

| CENTRAL SUBSYSTEM | RESTORE MAILBOX STATUS WORD ISSUE MAILBOX STATUS WORD STATUS |
|---|---|

*177*

| CENTRAL SUBSYSTEM DATA DISTRIBUTOR | IDENTIFY MAILBOX STATUS WORD STATUS ISSUE RELEASE COMMAND (5) |
|---|---|

*178*

| PERIPHERAL SUBSYSTEMS ACCESS CONTROLLER | TRANSFER RELEASE COMMAND |
|---|---|

*179*

| PERIPHERAL SUBSYSTEMS | PERIPHERAL SUBSYSTEM NOW AVAILABLE |
|---|---|

FIG.3E

6

61

BASES
FOR
ADDRESS
DATA

MAILBOX
STATUS WORD

LIST POINTER
WORD

62

IDCW

DCW

63

DATA
STORAGE
LOCATION

$F_{IG} - 4$